# EUROPÄISCHE PATENTSCHRIFT

(11) **EP 0 443 067 B1**
(45) Veröffentlichungstag und Bekanntmachung des Hinweises auf die Patenterteilung: **29.12.1993**
(21) Anmeldenummer: 90103410.8
(22) Anmeldetag: 22.02.1990
(51) Int. Cl.: C04B 35/54, F16J 15/34

(54) **Konisches oder kugelzonenartiges Dichtelement aus flexiblem Graphit**
Conical or spherical zone type sealing element made of flexible graphite
Elément d'étanchéité conique ou en forme de zone sphérique en graphite souple

(43) Veröffentlichungstag der Anmeldung: 28.08.1991
(73) Patentinhaber: SIGRI GREAT LAKES CARBON GmbH, D-65203 Wiesbaden (DE)
(72) Erfinder: Ammann, Dietrich, D-8900 Augsburg (DE); Hirschvogel, Alfred, D-8901 Achsheim (DE)

(56) Entgegenhaltungen:
- DE-B- 2 526 182
- GB-A- 1 227 405
- US-A- 3 404 061

## Beschreibung

Die Erfindung betrifft ein Dichtelement aus Graphit zum Abdichten des Spalts zwischen Paaren von Teilen mit konischen oder kugelzonenartigen Dichtflächen, das durch Umwickeln eines Dornes mit bandförmigem, flexiblem Graphit, Verpressen des Wickelkörpers in Achsrichtung des Dornes in einer Matrize und Abziehen des Dichtelements von dem Dorn hergestellt worden ist.

Kristallographisch gut geordneter Graphit, wie z.B. Flockengraphit läßt sich unter Einwirkung eines Oxidationsmittels und einer konzentrierten Säure in ein Graphitsalz überführen (DE-PS 26 08 866, EP 0 305 984 A2) das bei schnellem Erhitzen auf Temperaturen von 700 bis 1000 °C zu sogenanntem wurmförmigem Graphit expandiert. Aus diesem wurmförmigen Graphit können in Pressen oder Walzen ohne Zusatz von Bindemitteln flexible Folien oder Platten hergestellt werden (US-PS 3 404 061).

Wegen der überragenden Temperaturbeständigkeit, der Chemikalienbeständigkeit und der guten Formbarkeit wird flexibler Graphit u.a. für die Herstellung von statischen Dichtungen und wegen seiner guten, selbstschmierenden Eigenschaften auch für dynamische Dichtungen verwendet.

Zur Herstellung von Dichtungsringen, wie sie z.B. in Stopfbuchspackungen oder in Gleitringdichtungen verwendet werden, werden Graphitfolien in Streifen oder Bänder geschnitten oder gestanzt und die Bänder auf einen Dorn gewickelt, dessen Durchmesser gleich dem Innendurchmesser des herzustellenden Dichtungsringes ist. Der erhaltene Wickelkörper, in dem die Schichten der Graphitfolie im wesentlichen parallel zur Achse des Dornes ausgerichtet sind, wird dann in eine Preßform eingelegt und durch Anlegen einer in Richtung der Achse des Dornes wirkenden Kraft verdichtet und in die gewünschte Form gebracht. Bei diesem Preßvorgang werden die Folienbänder gestaucht. Sie falten sich zick-zack-artig ineinander, wodurch eine innige Verzahnung und Verfestigung bewirkt wird.

Dichtungsringe und -Elemente, die keinen rechteckigen Querschnitt haben, sind schwieriger herzustellen. Sie können z.B. aus durch Wickeln und Pressen erhaltenen Rohlingen erhalten werden, indem man die gewünschte Form aus dem Rohling spanabhebend herausarbeitet. Dieses Verfahren ist jedoch sehr aufwendig und wird deshalb selten angewendet. Ein Maßpressen aus einem zylindrischen Wickelkörper mit einem entsprechend angepaßten Preßwerkzeug ergibt nicht den gewünschten Erfolg, da der so erhaltene Dichtungskörper wegen der herstellungsbedingten starken Dichteunterschiede für allgemeine Anwendungen ungünstige Eigenschaften hat. Als Lösung dieses Problems wird in DE-PS 25 26 182 vorgeschlagen, die zum Wickeln auf den Dorn verwendeten Folienbänder so zuzuschneiden, daß der Wickelkörper ein dem Dichtungsring ähnliches Profil aufweist.

Mit dem im vorstehenden skizzierten Verfahren kann eine große Zahl unterschiedlicher Formen profilierter Dichtungsringe erhalten werden. Kennzeichnend für diesen Dichtungstyp ist die zick-zack-förmige Faltung der Folienlagen, die durch das Stauchen beim Preßvorgang entsteht. Für Dichtelemente mit vergleichsweise dünnen, konisch zulaufenden oder kugelzonenartigen Wänden, wie sie z.B. zum Dichten von entsprechend geformten Glasschliff-, Keramik- oder Metallteilen verwendet werden, ist diese Struktur jedoch nicht geeignet. Die im wesentlichen radialen Druckkräfte im Dichtsystem wirken senkrecht zum bei der Herstellung der Dichtung angewandten Verdichtungsdruck und pressen die Faltung wieder auf. Die Dichtung fließt und hat keinen zuverlässigen Sitz. Entsprechend mangelhaft ist die Dichtwirkung.

Bisher werden zum Abdichten von ineinandergreifenden Konussen oder von kugelzonenartigen Verbindungen spezielle Schliffette sowie Kunststoffhülsen und -Ringe verwendet. Diese Dichtungsmittel haben eine Reihe von Nachteilen. Schliffette werden häufig von in der Apparatur befindlichen Substanzen angelöst oder ausgewaschen und verunreinigen diese. An Schliffett verarmte Schliffverbindungen werden entweder undicht oder/und lassen sich nicht mehr ohne Schwierigkeiten lösen. Schäden an teuren Apparaturen sind die Folge. Fluorkunststoffdichtungen haben nur eine Dauerstandstemperatur von ca. 200 °C. Bei höheren Temperaturen beginnen sie zu fließen. Durch diese geringe Formstabilität wird zusätzlich der Betriebsdruck der Anlagen begrenzt. Unter bestimmten Betriebsbedingungen verkleben derartige Hülsen und Ringe unlösbar mit Glas und machen die Schliffe unbrauchbar. Im Überhitzungsfall geben fluorhaltige organische Polymere gesundheitsschädliche Spaltprodukte ab.

Der Erfindung liegt deshalb die Aufgabe zugrunde, ein Dichtelement mit hohlkonischen oder hohlkugelzonenartigen Dichtflächen zu schaffen, das
bei Temperaturen oberhalb 200 °C beständig ist,
selbst bei hohen Temperaturen und Drücken nicht fließt,
die Dichtflächen nicht angreift,
sich leicht von den Dichflächen lösen läßt,
gesundheitlich unbedenklich ist und
eine hervorragende chemische Beständigkeit aufweist.

Die Aufgabe wird mit einem Dichtelement der eingangs genannten Art gelöst, das aus zwei Zonen gebildet ist, nämlich einer unteren Zone mit hohlkonischer oder hohlkugelzonenförmiger Gestalt, die den Dichtflächen der zu verbindenden Teile im wesentlichen entspricht und die aus einer Folge parallel zu den Dichtflächen verlaufender, sich in achsialer Richtung versetzt überlappender und miteinander verpreßter Schichten flexiblen Graphits, deren vom Wickeln her flache Form beim Pressen im wesentlichen erhalten geblieben ist und die nicht zu geknickten Strukturen gestaucht worden sind, besteht und einer oberen, einen Verstärkungsring bildenden Zone, die mit der unteren Zone entlang des Kreisrings des größten Durchmessers dieser unteren Zone stoffschlüssig verbunden ist und deren Wandstärke größer als die Wandstärke der unteren Zone ist, in der aber die Graphitfolien beim Pressen gestaucht worden sind und eine zick-zack- oder gewellte Struktur aufweisen.

Der untere Teil des Dichtelements ist der gestellten Dichtungsaufgabe angepaßt. Die Graphitfolienlagen sind auch nach dem Pressen beim Herstellen nicht gefaltet oder geknickt. Sie überlappen sich, wie dies in ähnlicher Weise bei Dachziegeln oder Schindeln der Fall ist. Diese Anordnung gibt der Dichtung eine hohe Druckfestigkeit, ermöglicht aber kleine Gleitbewegungen, die zur Erreichung eines perfekten Sitzes der abzudichtenden Teile auf dem Dichtelement für den Abbau mechanischer Spannungen notwendig sind.

Neben der Stärke der für die Herstellung verwendeten Graphitfolie wird die Stärke des Dichtelements durch die Anzahl der sich überlappenden Folienlagen und deren Überlappungsgrad bestimmt. Bei sehr dünnen Dichtelementen wird eine gegebene Graphitfolienlage von nur einer weiteren Folienlage überdeckt. Bei mechanisch robusteren und bei größeren Dichtelementen überlappen bis zu zehn weitere Graphitfolienlagen eine gegebene Lage. Es ist möglich, noch mehr Graphitfolienlagen in dieser Weise übereinander zu wickeln. Die Weiterverarbeitung zu erfindungsgemäßen Dichtelementen bereitet dann aber zunehmend Schwierigkeiten und die so erhaltenen Dichtelemente haben dann Wandstärken, die für die Lösung der Dichtungsaufgaben im allgemeinen nicht erforderlich sind.

Der Überlappungsgrad zweier benachbarter Graphitfolien in einem Dichtelement liegt in den Fällen, wo sehr dünnwandige, leichte Dichtelemente benötigt werden, im allgemeinen zwischen 30 und 60 %. Dies ist z.B. bei Dichtungen für kegelstumpfförmige Glasschliffe der Fall. Bei dickwandigeren, mechanisch stabileren Dichtelementen, wie Dichtungseinsätzen für Kugelschliffe werden Überlappungsgrade von bis zu 80 % hergestellt. Wo dies erforderlich ist, können aber auch hohe Überlappungsgrade bei kegelstumpfförmigen oder niedrige Überlappungsgrade bei kugelzonenartigen Dichtungen Anwendung finden.

Die untere Zone ist entlang des Kreisringes ihres größten Durchmessers stoffschlüssig mit einer oberen, einen Verstärkungsring bildenden Zone verbunden. Diese obere Zone besteht ebenfalls aus um einen Dorn gewickelten und dann in Richtung der Achse des Dornes verpreßten Bändern oder Streifen aus flexiblem Graphit und wird bei der Herstellung der unteren Zone angepreßt. Die Preßmatrize ist dazu so ausgebildet, daß nur die Folienlagen der oberen Zone gestaucht werden und dann im Verstärkungsring des fertig gepreßten Dichtelements geknickt und ineinander zick-zack-artig gefaltet vorliegen. Dadurch wird der Ring gegenüber Druckkräften, die gegen seinen äußeren Umfang wirken, besonders stabil. Die obere Zone dient infolgedessen der Stabilisierung der empfindlicheren, unteren Zone des Dichtelements und weniger zu Dichtzwecken. Sie schützt die untere Zone vor Beschädigungen durch Deformation und Berührungen der Dichtflächen z.B. mit Werkzeugen und erleichtert die Handhabung. Bei Anwendungsfällen, bei denen der Verstärkungsring z.B. aus Platzgründen stört oder, wenn die untere Zone des Dichtelements ausreichend formstabil ist, kann auf den Verstärkungsring verzichtet werden. Das Dichtelement muß dann entsprechend vorsichtig hantiert werden.

Die Dichte der Dichtelemente liegt je nach Anwendungsfall zwischen 1,0 und 1,8 g/cm³. Wenn die Dichtflächen rauhe oder unebene Oberflächen haben, wird ein Dichtelement mit niedriger Dichte verwendet, da sich dieses beim Anspannen der Dichtung in alle Unebenheiten eindrückt und auch unter diesen ungünstigen Bedingungen noch zuverlässig abdichtet. Dichtelemente mit hohen Dichten werden eingesetzt, wenn eine Abdichtung gegen hohe Drücke gefordert ist. Der genannte Dichtebereich schließt auch extreme Anwendungsfälle ein. Für die üblichen Dichtungsaufgaben reichen jedoch Dichten von 1,2 bis 1,6 g/cm³ aus. Ausgangsprodukt für die Herstellung erfindungsgemäßer Dichtelemente können käufliche Graphitfolien mit Dichten zwischen 0,5 und 1,1 g/cm³ sein. Eine bevorzugte Ausführungsform der erfindungsgemäßen Dichtelemente weist auf mindestens einer seiner Dichtflächen mindestens eine kreisringförmige, erhabene Zone auf, deren Dichte geringer als der Mittelwert der Dichte des Grundkörpers ist. Diese Zone dient dazu, beim ersten Andrücken der Dichtungsflächen mit geringer Kraft sofort eine Abdichtung zu bewirken. Beim weiteren Erhöhen der Anpreßkraft wird diese Zone bis auf die Grundfläche der Dichtung komprimiert und stellt dann innerhalb der Dichtflächen des Dichtelements eine Zone besonders guter Dichtwirkung dar. Ein Dichtelement kann auch mehr als eine derartige kreisförmige Zone haben und die Zonen können sich entweder auf einer oder auf beiden Seiten der Dichtflächen befinden. Die Dichte der erhabenen Zonen liegt unter dem Mittelwert der Dichte des Grundkörpers. Sie ist im allgemeinen mindestens 10 % niedriger als der Mittelwert der Dichte des Grundkörpers. Ihre Höhe beträgt 0,2 bis 3 mm und ihre Breite an der Basis das Doppelte ihrer Höhe. Die Zonen haben zweckmäßigerweise einen kreisabschnitt- oder ellipsenabschnittförmigen Querschnitt. Der Querschnitt kann aber auch andere geeignete Formen, wie z.B. Trapez- oder Dreieckform haben. Anzahl, Ausbildung und Anordnung der erhabenen Zonen können variieren. Sie werden der zu lösenden Dichtungsaufgabe angepaßt.

Die erfindungsgemäßen Dichtelemente haben folgende Vorteile: Sie sind bis zu höchsten Temperaturen druckfest und zeigen kein Kriechen. Die einmal eingestellte Schraubenvorspannung an der Dichtung verändert sich nicht. Mechanische Spannungen innerhalb des Dichtsystems werden infolge der Ausrichtung der Graphitschichten parallel zu den Dichtflächen durch kleine Gleitbewegungen im Dichtelement ohne Beeinträchtigung der Dichtwirkung abgebaut. Da sie ausschließlich aus Graphit bestehen, haben die Dichtelemente eine ausgezeichnete Beständigkeit gegen den Angriff chemischer Agenzien. Sie sind bis zu höchsten Temperaturen stabil, wobei von ca. 450 °C ab ein die Oxidation verhinderndes Schutzgas angewendet werden muß. Sie lassen sich jederzeit leicht von den Dichtflächen lösen, wodurch Beschädigungen der Dichtflächen vermieden werden. In vielen Fällen kann das Dichtelement danach weiterverwendet werden. Der als Dichtungswerkstoff verwendete hochreine Graphit ist gesundheitlich völlig unbedenklich und setzt auch bei höheren Temperaturen keine gefährlichen Zersetzungsprodukte frei.

Dichtelemente nach der Erfindung werden beispielsweise zum Abdichten von Schliffverbindungen an Glas- oder Quarzgutapparaturen, an entsprechend geformten Verbindungen aus Keramik oder zum Abdichten von Konussen an Spritzgußmaschinen verwendet.

Die Erfindung wird anhand der folgenden Abbildungen beispielhaft erläutert.

Es zeigen:

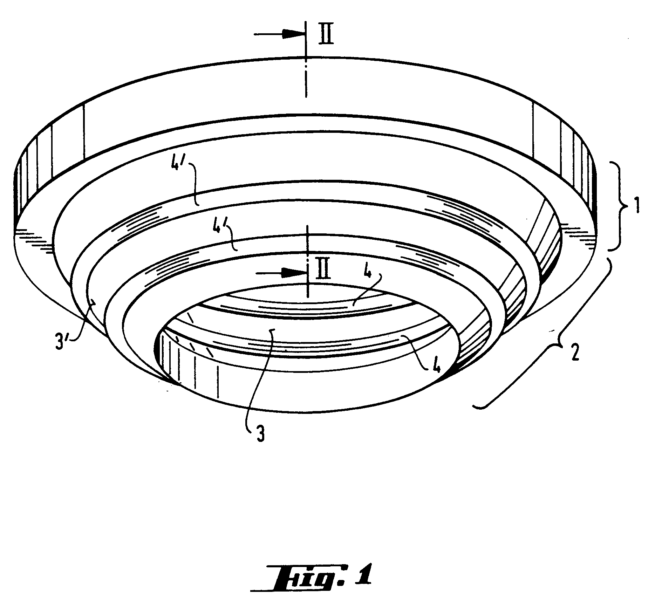

- Fig. 1,: eine perspektivische Gesamtansicht eines Dichtelements für Kugelschliffe.
- Fig. 2,: einen Querschnitt durch ein Dichtelement für Kugelschliffe.
- Fig. 3,: einen Querschnitt durch ein Dichtelement für Kegelschliffe.

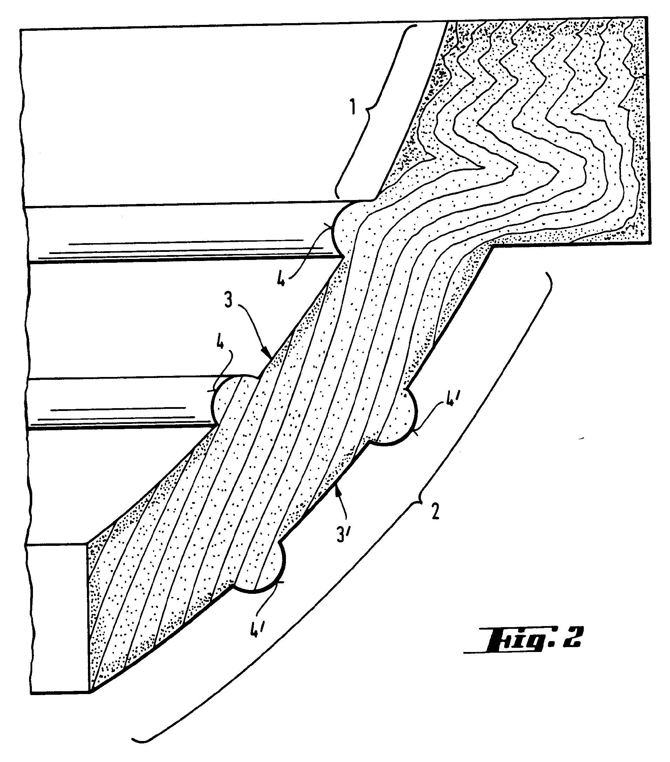

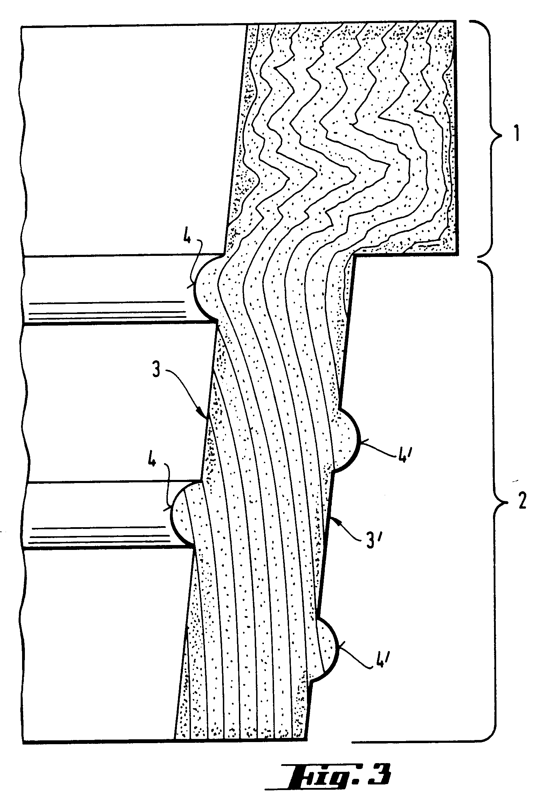

In den Fig. ist (1) die obere, den Verstärkungsring bildende Zone, in der die verpreßten Folienlagen, wie aus Fig. 2 und 3 hervorgeht, eine im wesentlichen gefaltete, zick-zack-artige Struktur haben. Die obere Zone (1) ist stoffschlüssig mit der unteren Zone (2), die die Dichtflächen (3) und (3') aufweist, verbunden. In der unteren Zone sind die Folienlagen nicht gefaltet oder gestaucht, sondern sie überlappen sich, wie die Fig. 2 und 3 zeigen, in achsialer Richtung lagenweise versetzt. Auf den Dichtflächen (3), (3') befinden sich kreisringförmige, erhabene Zonen (4, 4'), die eine niedrigere Dichte als der Grundkörper des Dichtelements haben und der Verbesserung der Dichtwirkung dienen.

## Patentansprüche

1. Dichtelement aus Graphit zum Abdichten des Spalts zwischen Paaren von Teilen mit konischen oder kugelzonenartigen Dichtflächen, das durch Umwickeln eines Dornes mit bandförmigem, flexiblem Graphit, Verpressen des Wickelkörpers in Achsrichtung des Dornes in einer Matrize und Abziehen des Dichtelements von dem Dorn hergestellt worden ist,
dadurch gekennzeichnet, daß
das Dichtelement aus zwei Zonen (1, 2) gebildet ist, einer unteren Zone (2) mit hohlkonischer oder hohlkugelzonenförmiger Gestalt, die den Dichtflächen der zu verbindenden Teile im wesentlichen entspricht und die aus einer Folge parallel zu den Dichtflächen verlaufender, sich in achsialer Richtung versetzt überlappender und mit einander verpreßter Schichten flexiblen Graphits, deren vom Wickeln her flache Form beim Pressen im wesentlichen erhalten geblieben ist, besteht und einer oberen, einen Verstärkungsring bildenden Zone (1), die mit der unteren Zone (2) entlang des Kreisrings des größten Durchmessers dieser unteren Zone stoffschlüssig verbunden ist und deren Wandstärke größer als die Wandstärke der unteren Zone (2) ist, in der aber die Graphitfolien beim Pressen gestaucht worden sind und eine Zick-Zack- oder gefaltete Struktur aufweisen.

2. Dichtelement aus Graphit zum Abdichten des Spalts zwischen Paaren von Teilen mit konischen oder kugelzonenartigen Dichtflächen, das durch Umwickeln eines Dornes mit bandförmigem, flexiblem Graphit, Verpressen des Wickelkörpers in Achsrichtung des Dornes in einer Matrize und Abziehen des Dichtelements von dem Dorn hergestellt worden ist,
dadurch gekennzeichnet, daß
das Dichtelement eine hohlkonische oder hohlkugelzonenförmige Gestalt hat, die den Dichtflächen der zu verbindenden Teile im wesentlichen entspricht und daß das Dichtelement aus einer Folge parallel zu den Dichtflächen verlaufender, sich in achsialer Richtung versetzt überlappender und miteinander verpreßter Schichten flexiblen Graphits, deren vom Wickeln her flache Form beim Pressen im wesentlichen erhalten geblieben ist, besteht.

3. Dichtelement nach Patentanspruch 1 und 2,
dadurch gekennzeichnet, daß
mindestens eine Seite seiner Dichtflächen mindestens eine kreisringförmige, erhabene Zone (4, 4') hat, deren Dichte niedriger als die Dichte des Grundkörpers ist.

4. Dichtelement nach den Patentansprüchen 1 bis 3,
dadurch gekennzeichnet, daß
die Dichte der kreisringförmigen, erhabenen Zonen (4, 4') mindestens 10 % unter dem Mittelwert der Dichte des Grundkörpers liegt, ihre Höhe 0,2 bis 3 mm und ihre Breite an der Basis das Doppelte ihrer Höhe beträgt.

5. Dichtelement nach den Patentansprüchen 1 bis 4,
dadurch gekennzeichnet, daß
die erhabenen Zonen (4, 4') einen kreisabschnittförmigen Querschnitt haben.

6. Dichtelement nach den Patentansprüchen 1 bis 5,
dadurch gekennzeichnet, daß
die erhabenen Zonen (4, 4') einen dreieckigen Querschnitt haben.

7. Dichtelement nach den Patentansprüchen 1 bis 6,
dadurch gekennzeichnet, daß
die erhabenen Zonen (4, 4') einen trapezförmigen Querschnitt haben.

8. Dichtelement nach den Patentansprüchen 1 bis 7,
dadurch gekennzeichnet, daß
es eine Rohdichte im Bereich von 1,0 bis 1,8 g/cm³ aufweist.

9. Dichtelement nach den Patentansprüchen 1 bis 8,
dadurch gekennzeichnet, daß
es eine Rohdichte im Bereich von 1,2 bis 1,6 g/cm³ aufweist.

10. Dichtelement nach den Patentansprüchen 1 bis 9,
dadurch gekennzeichnet, daß
eine gegebene Lage Graphitfolien von wenigstens einer weiteren und höchstens von 10 weiteren Lagen Graphitfolie überlappt wird.

11. Dichtelement nach den Patentansprüchen 1 bis 10,
dadurch gekennzeichnet, daß
die Überlappung zweier, benachbarter Lagen Graphitfolie im Bereich von 30 bis 80 % liegt.

## Claims

1. A sealing element of graphite for sealing the gap between pairs of parts with conical or spherical segment-like sealing surfaces, which has been produced by wrapping band-shaped, flexible graphite around a mandrel, compressing the wrapped body in the axial direction of the mandrel in a mould and pulling off the sealing element from the mandrel, characterised in that the sealing element is formed of two zones (1,2), a lower zone (2) with a hollow-conical or hollow-spherical segment shape, which substantially corresponds to the sealing surfaces of the parts to be connected and which consists of a sequence of layers of flexible graphite pressed together, extending parallel to the sealing surfaces, and overlapping in an offset manner in the axial direction, the flat form of which, from the wrapping, is substantially maintained when pressing, and an upper zone (1) forming a reinforcing ring, which zone is connected to the lower zone (2) along the circular ring of the largest diameter of this lower zone in a material-tight manner, and the wall thickness of which is greater than the wall thickness of the lower zone (2) in which, however, the graphite foils have been buckled when pressing and have a zig-zag or folded structure.

2. A sealing element of graphite for sealing the gap between pairs of parts with conical or spherical segment-like sealing surfaces, which has been produced by wrapping band-shaped, flexible graphite around a mandrel, compressing the wrapped body in the axial direction of the mandrel in a mould and pulling off the sealing element from the mandrel, characterised in that the sealing element has a hollow-conical or hollow-spherical segment shape, which corresponds corresponds substantially to the sealing surfaces of the parts to be connected and in that the sealing element consists of a sequence of layers of flexible graphite pressed together, extending parallel to the sealing surfaces, and overlapping in an offset manner in the axial direction, the flat form of which, from the wrapping, is substantially maintained when pressing.

3. A sealing element according to claim 1 and 2, characterised in that at least one side of its sealing surfaces has at least one circular ring-shaped, raised zone (4,4'), the density of which is less than the density of the basic body.

4. A sealing element according to claims 1 to 3, characterised in that the density of the circular ring-shaped, raised zones (4,4') is at least 10% below the average value of the density of the basic body, the height thereof being 0.2 mm to 3 mm and the width thereof being based on double the height thereof.

5. A sealing element according to claims 1 to 4, characterised in that the raised zones (4,4') have a circle-segment cross-section.

6. A sealing element according to claims 1 to 5, characterised in that the raised zones (4,4') have a triangular cross-section.

7. A sealing element according to claims 1 to 6, characterised in that the raised zones (4,4') have a trapezoidal cross-section.

8. A sealing element according to claims 1 to 7, characterised in that it has a bulk density in the range of 1.0 to 1.8 g/cm³.

9. A sealing element according to claims 1 to 8, characterised in that it has a bulk density in the range of 1.2 to 1.6 g/cm³.

10. A sealing element according to claims 1 to 9, characterised in that a given layer of graphite foils is overlapped by at least one further and at the most ten further layers of graphite foil.

11. A sealing element according to claims 1 to 10, characterised in that the overlapping of two adjacent layers of graphite foil lies in the range of 30 to 80 %.

## Revendications

1. Elément d'étanchéité en graphite destiné à rendre étanche l'intervalle entre des couples de pièces ayant des surfaces d'étanchéité coniques ou en forme de zones sphériques, élément qui a été fabriqué par enroulement d'un mandrin avec du graphite souple sous forme de ruban, pressage du corps enroulé dans le sens de l'axe du mandrin dans une matière et extraction de l'élément d'étanchéité du mandrin,
caractérisé en ce que :
- l'élément d'étanchéité est constitué de deux roues (1, 2), d'une zone inférieure (2) avec une structure conique creuse ou en forme de zone sphérique creuse, qui correspond essentiellement aux surfaces d'étanchéité des pièces à réunir et qui se compose d'une série de couches de graphite souple, se développant parallèlement aux surfaces d'étanchéité, se recouvrant décalées dans le sens axial et comprimées l'une contre l'autre, couches dont la forme plane depuis l'enroulement est essentiellement maintenue lors du pressage, et
- d'une zone supérieure (1) formant un anneau de renforcement, qui est reliée par interpénétration de matière à cette zone inférieure (2) le long de l'anneau circulaire de plus grand diamètre de cette zone inférieure et dont l'épaisseur de paroi est supérieure à celle de la zone inférieure ((2), mais dans laquelle les feuilles de graphite ont été refoulées lors du pressage et forment une structure en zigzag ou pliée.

2. Elément d'étanchéité en graphite pour rendre étanche l'intervalle entre couples de pièces ayant des surfaces d'étanchéité coniques ou en forme de zones sphériques, qui a été fabriqué par enroulement d'un mandrin avec du graphite souple, sous forme de ruban, pressage du corps enroulé dans le sens de l'axe du mandrin dans une matrice et extraction de l'élément d'étanchéité du mandrin,
caractérisé en ce que :
- l'élément d'étanchéité a une structure conique creuse ou en forme de zone sphérique creuse, qui correspond essentiellement aux surfaces d'étanchéité des pièces à réunir, et
- l'élément d'étanchéité se compose d'une série de couches de graphite souple, se développant parallèlement aux surfaces d'étanchéité, se recouvrant avec décalage dans le sens axial et comprimées l'une contre l'autre, dont la forme plane est essentiellement maintenue depuis l'enroulement lors du pressage.

3. Elément d'étanchéité selon l'une des
revendications 1 et 2,
caractérisé en ce que :
- au moins une face de ses surfaces d'étanchéité a au moins une zone en relief (4, 4') en forme d'anneau circulaire, dont l'épaisseur est plus petite que celle du corps de base.

4. Elément d'étanchéité selon les revendications 1 à 3,
caractérisé en ce que :
- l'épaisseur des zones en relief, en forme d'anneau circulaire (4, 4') est au moins 10 % inférieure à l'épaisseur moyenne du corps de base, sa hauteur va de 0,2 à 3 mm et sa longueur est basée sur le double de sa hauteur.

5. Elément d'étanchéité selon les revendications 1 à 4,
caractérisé en ce que :
-les zones en relief (4, 4') ont une section transversale en forme de segment de cercle.

6. Elément d'étanchéité selon les revendications 1 à 5,
caractérisé en ce que :
- les zones en relief (4, 4') ont une section transversale triangulaire.

7. Elément d'étanchéité selon les revendications 1 à 6,
caractérisé en ce que :
- les zones en relief (4, 4') ont une section transversale en forme trapézoïdale.

8. Elément d'étanchéité selon les revendications 1 à 7,
caractérisé en ce qu'il présente :
- une densité brute dans la plage de 1,0 à 1,8 g/cm^{3.}

9. Elément d'étanchéité selon les revendications 1 à 8,
caractérisé en ce qu'il présente :
- une densité brute dans la plage de 1,2 à 1,6 g/cm³.

10. Elément d'étanchéité selon les revendications 1 à 9,
caractérisé en ce que :
- une couche donnée de feuilles de graphite est recouverte d'au moins une autre et d'au plus 10 autres couches de feuilles de graphite.

11. Elément d'étanchéité selon les revendications 1 à 10,
caractérisé en ce que :
- le recouvrement de deux couches voisines de feuilles de graphite se situe dans la gamme de 30 à 80 %.
